Europäisches Patentamt

European Patent Office

Office européen des brevets

(11) Publication number: **0 154 614 B1**

# EUROPEAN PATENT SPECIFICATION

(45) Date of publication of patent specification: **18.09.91**　(51) Int. Cl.⁵: **A23C 9/123**

(21) Application number: **85850058.0**

(22) Date of filing: **21.02.85**

(54) Method of cultivating, in milk, organisms having a slow growth capacity, and organisms produced by the method, and milk products containing such organisms.

(30) Priority: **05.03.84 SE 8401203**

(43) Date of publication of application:
**11.09.85 Bulletin 85/37**

(45) Publication of the grant of the patent:
**18.09.91 Bulletin 91/38**

(84) Designated Contracting States:
**AT BE CH DE FR GB IT LI NL**

(56) References cited:
**EP-A- 0 061 946　　DE-A- 2 057 906**
**DE-A- 2 421 084　　FR-A- 2 336 886**
**FR-A- 2 506 129　　US-A- 4 410 549**

**J. RASIC: "Yoghurt", vol. 1, 1978, pages
364,365,319,320, Technical Dairy Publishing
House, Copenhagen, DK**

**J. RASIC et al.: "Bifidobacteria and their
role", 1983, pages 102-107,114-116,120-129,
Birkhäuser Verlag, Basel, CH**

**Yoghurt, J. Rasic et al., distr. by Tech. Dairy
Publ. House, p. 172-176, Copenhagen, Den-
mark**

(73) Proprietor: **Arla, ekonomisk förening
Dalagatan 3
S-105 46 Stockholm(SE)**

(72) Inventor: **Fondén, Rangne
c/o Arla, ekonomisk förening Dalagatan 3
S-105 46 Stockholm(SE)**
Inventor: **Holgersson, Sture
c/o Arla, ekonomisk förening Box 74
S-199 22 Enköping(SE)**

(74) Representative: **Avellan-Hultman, Olle
Avellan-Hultman Patentbyra AB P.O. Box
5366
S-102 46 Stockholm 5(SE)**

## Description

The present invention generally relates to a method of cultivating, in milk, organisms or bacterial cultures having a slow growth capacity (Lactobacillus acidophilus, certain types of Bifidobacteria, Streptococcus faecium), and the invention is concerned with production at industrial scale of such organisms or cultures and of edible products containing such organisms or bacterial cultures.

The invention has been developed especially in connection to manufacture of acidified edible milk products containing bacterial cultures of the strain Lactobacillus acidophilus or Bifido bacterial species, like adolescentis, breve, longum etc., but the invention is not restricted to this specific area but is useful för cultivation, in milk, of slow growing organisms for any other purposes. For the sake of clearness the invention is, however, to be described in the following, mainly in connection to manufacture of the said acidified, edible milk products.

An edible milk product containing bacterial cultures of the type Lactobacillus acidophilus or certain types of human Bifido bacterial species like adolescentis, breve, longum and certain streptococcus etc., have a beneficial effect on the human body. This is also true for Lactobacillus acidophilus and the said Bifidobacterial species which are a part of the living bacterial flora of the intestinal tract of the human body. A milk product containing a substantial amount of such living bacteria may restore a disordered bacterial flora and also in other cases may have a beneficial effect on the digestion and on the body function. The said types of bacteria are not adapted to milk, have a poor growth capacity in milk and this has caused some problems in the manufacture of milk products containing such bacteria.

The strain type Lactobacillus acidophilus is characterized, amoung other things, in that it has a slow growth capacity, especially when cultivating the bacteria in milk, and in that it is susceptible to infections and contamination with other microorganisms. Products containing such organisms have to be prepared to maintain a high-amount of living bacteria even after having been stored for some time and they have to be prepared and treated with utmost care for avoiding that the product is infected or contaminated by other products or that the bacterial culture is killed.

Milk products solely containing L. acidophilus bacteria have previously been prepared in that a slight amount of a bacterial culture, preferably a mother culture, of L. acidophilus has been added to the milk product in the very package in which the product is finally to be marketed.

Since the bacterial culture has a slow growth speed in milk and generally a rather little amount of mother culture is added, it takes a long time for cultivating the bacterial culture to the intended amount of bacteria. Depending of said long cultivation time, there is a risk that the product is infected, and the milk product can not be manufactured in an industrial scale. Also there is a lot of work involved, in handling of the individual units and controlling that each unit is free from infectants. For practical and economical reasons it has not been considered possible to add any larger amount of mother culture to the process milk batch.

Before the mother culture is added to the process milk batch directly into the final container, the process milk must pass an autoclaving process. Autoclaving of milk products, however, gives problems which are hard to overcome, for instance burned desposits of milk on the equipment, some troublesome changes in taste and structure of the milk and the change of the colour of the milk to a brownish colour. Further autoclaving is time consuming and is an expensive process. Autoclaving of the actual product therefore has been considered to give a non-acceptable product.

It is also known to add a cultivated, concentrated L. acidophilus to the pasteurized milk, without having the culture to grow in the milk. In that case the milk only acts as a carrier and not as a cultivation substrate. For economical reasons, the amount of L. acidophilus generally does not exceed some tenth millions per ml.

The object of the invention therefore is to solve the problem of providing a method of peparing, in an industrial scale, a milk product containing a high amount of living bacteria, especially bacteria of the type having a slow growth capacity in milk, for instance bacteria of the strain L. acidophilus or some type of Bifidobacteria like breve, longum etc.

According to the invention a bulk stater culture is prepared in that milk is heat treated according to an UHT (Ultra High Temperature) process to a temperature of about 140°C and is supplied to a sterilized tank over a sterile equipment, an amount of said organism having the slow growth capacity is admixed to the UHT treated milk under known sterile conditions, the mixture is kept at optimum growth temparature for the actual organism, and the organism is allowed to grow until the bulk starter culture has reached a pH value of about 4.5-5.0 corresponding to a growth period of 14-48 and whereby a bacterial content of more than $10^8$ per ml has been obtained, and parallelly thereto a process milk batch is prepared, which may include additives, and which comprises milk which has preferably been heat treated by any known method in order to denaturate whey proteins, has been homogenized and might have been given additives like yeast extract and protein preparations, and which has thereafter been UHT-treated and transmitted to an ordinary product tank, which has been carefully cleaned and disinfected, whereupon the bulk stater culture is admixed to the process milk batch in an amount of 2.5 - 25% the amount preferably being calculated for a growth period of 14-24 hours, and the milk/bulk starter culture mixture is maintained at the optimum growth temperature of the bacterial culture, and the culture is allowed to grow until a pH value of about 4.5-4.7 has been reached, whereby the bacteria content of the ready product is at least $10^8$ per ml, whereby the process is interrupted and the product is cooled and packed.

Before the bulk starter is prepared a suitable tank for this purpose is prepared, which tank is sterilized by means of high pressure steam having a temperature of about 120-150°C or preferably about 140°C. The sterilization of a tank of 1 000 liter at a temperaure of 135°C normally takes at least 30 minutes. At higher temperature a shorter sterilization time is needed. The UHT-treatment of the milk for the bulk starter involves substantial advantages as compared with the previously known autoclaving process. The milk is treated more carefully, there are no changes in taste and character of the milk, the milk maintains its nutritional value, it maintains its colour, the micro oganisms of the milk are effectively killed, and it seems that the milk after the UHT-treatment is a better growth environment for the bacterial culture which otherwise has obvious slow growth capacity in milk. The UHT-treatment of milk which is known in other connections is made so, that the milk is heated to an ultra high temperature, for instance a temperature of 140-150°C according to the known VTIS-method, whereby steam under high pressure is directly injected in the milk, whereupon the steam is removed from the milk by any known method like cooking the steam away in a vacuum container. Alternatively the UHT-treatment can be made by indirect heating in a heat exchanger.

Preferably suitable growth stimulants for the actual bacterial culture has been added to the bulk starter milk, for instance yeast extract, proteins like skimmilk protein, whey protein, skimmilk powder etc. The temperature of the bulk starter milk should be the best growth temperature for the bacterial culture, which for instance for L. acidofilus is 35-44°C or preferably about 37°C. The amount of culture which is inoculated in the bulk starter milk is calculated so, as to give a suitable growth time to obtain the ready bulk starter for instance a time of 14-48 hours. For L. acidophilus an inoculation amount of 1 % is quite sufficient. The amount of inoculated culture may be varied within rather wide limits. A too small amount of inoculated culture gives a long growth period with subsequent risk that the culture is infected, a too large amount of inoculated culture is uneconomical and does not give any special advantages. Preferably the amount of inoculated culture is calculated so that the bulk starter is prepared analoguously to the subsequent stage of final peparing of the milk product. The growth time also may effectively be controlled by varying the amount of added protein, since the protein acts as a buffer for the culture. An increasing amount of protein gives a prolonged growth time and a reduced amount of protein gives a shortened growth time. Within the indicated growth period the mother culture ought to reach a bacterial count of more than $10^8$ per ml. It may take 14-48 hours to reach said count. The growth period should be ended at a pH value of about 4.5-5.0 in order that the bulk starter should be as active as possible.

Parallelly to the preparation of the bulk starter a process milk batch is prepared. The milk may be buttermilk, skimmilk or milk having different fat content. First the milk is homogenized and heat treated in a conventional way, among other things, for denaturating the whey proteins, for instance for a period of 5 minutes at 95°C or a correspondingly longer time and lower temperature, and the milk is than UHT-treated and is once again homogenized. Preferably an amount of yeast extract is added to the milk as a growth stimulant for the mother culture, and protein, for instance skimmilk protein is added as a buffer. As previously mentioned, the growth time can be controlled within special limits by controlling the growth temperature and the amount of bulk starter and the amount of protein added to the process milk batch, so that the best possible product is obtained within a given period of time. Consequently it is possible to industrially prepare the product in the form of a product batch per 24 hours in the same cultivating tank.

The homogenized and heat treated process milk is transferred to a tank which has been carefully washed and disinfected. At this stage, it is not necessary to use special high pressure tanks as sterile tanks, since the raw material has already been UHT-treated and since a large amount of active culture has been inoculated in the milk. Therefore it is possible to utilize the equipment which is normally available in the dairy industries. The disinfection may for instance be made by means of steam having a temperature of about 100-105°C for a period of 20-40 minutes.

Thereafter a heavy dose of bulk starter is inoculated in the process milk batch, for instance in an amount of between 2,5 and 25%, preferably between 5-20%. The amount of inoculated culture is preferably calculated so that the growth period is 14-24 hours. This is made by considering the amount of protein or yeast extract added. By protein is meant a milk protein like skim milk protein, whey protein, butter milk protein, casein or mixtures thereof in powder form or in liquid form. Normally the protein (3-36 g/kg milk) is added so that the process milk batch gets a 50% increase of the protein content, whereby the process milk will have a protein content of about 3,4-5,0%. The yeast extract of the process milk batch is admixed in an amount of 0,1-2 g yeast extract per litre milk. The ready product will have a bacteria count higher than $2*10^8$ per ml, and after having been stored for 10 days and nights at $+8°C$ the bacterial count will be higher than $3*10^7$ per ml.

It has been shown that it is of great importance to buffer the product with protein, not only considering the final total amount of bacteria, but also considering the survival of the bacteria. Tests have proved that the bacterial content of a non-buffered product decreases to a substantially higher extent than for a protein buffered product. In comparative tests the process milk batch has been inoculated with the same amount of bulk starter, but in one case A) the process milk had not received any addition of protein, and in the second case B) the process milk had been given 50% increase of the protein content. The following was found:

A) The fresh, ready product had a bacterial content of $1,0 * 10^9$ per ml. After the product had been stored for 10 days the amount of living bacteria had decreased to $0,1 * 10^9$, that is a reduction of bacterial content of 10 times;

b) The fresh, ready product had a bacteria content of $2,5 * 10^9$ per ml. After the product had been stored for 10 days, the amount of living bacteria had decreased to $0.9 \times 10^9$, that is a reduction of content of a little less than 3 times, and the bacterial content was almost as high as according to example A) before the product was stored.

The survival of the bacterial culture in a protein buffered product at $+8°C$ consenquently is more than three times higher than for the non-buffered product. It should be additionally noticed that the addition of milk protein also includes an addition of calcium and phosphorus etc., which in addition to the protein contributes to the buffering effect.

The growth of the bacterial culture in the process milk is made at the optimum temperature for the culture, which may be about 37°C, and the pH-value of the final product will be about 4.5-4.7.

It has also been shown that the dry matter content is of importance for the method according to the invention, and as will be evident from the following examples, the total amount of not-fat dry matter preferably should not exceed 18% (180 g/kg milk). The protein content of the admixed protein preparation should be at least 15% of the dry matter content.

As previously mentioned the process can to the greatest extent be performed in conventional dairy industry equipment, and the process is cheap and relatively quick. The only cost to be added, as compared with conventional manufacture of cultured milk products, is the costs for UHT-treatment of the milk and for providing a small sterile tank for preparing the bulk starter. It should be noted that the disinfecting of the process tank also can be made by cold disinfecting, for instance in that the tank is carefully cleaned and disinfected by means of a solution of peracetic acid and hydrogene peroxide. There is no need to carefully rinse the tank after the disinfection, but immediately before the milk is supplied, the tank is rinsed with water having less than 1 bacteria per ml.

Now the invention is to be described more closely in connection to several examples. It is, however, to be understood that said examples are only of explanating character and that the invention is restricted only by the appended claims.

The above mentioned method may be said to include three independent process stages, viz. preparing of an intermediate culture from a mother culture (I), preparing of a bulk starter culture from the intermediate culture (II) and preparing a process milk batch from the bulk starter culture (III).

## I PREPARING THE INTERMEDIATE CULTURE

The preparation of the intermediate culture is made according to any known process and does not include any special process steps for the invention. For the sake of completeness the preparation of the intermediate culture, however, is to be exemplified very shortly in the following:

### Intermediate Culture 1

An intermediate culture was prepared in that 10 l skimmilk containing 1 g/l yeast extract and having been heat treated according to the so called UHT-method at a temperature of 140°C was inoculated with 0.1 l of a mother culture of Lactobacillus acidophilus of the neotype strain. The culture was grown at 37°C for 30 hours, whereby the bacterial content had increased to $0.6 \times 10^9$ per ml. The intermediate culture was later used for preparing a bulk starter culture as will be explained in the following. The prepared intermediate culture was of good quality.

### Intermediate Culture 2

An intermediate culture was prepared in that 5 l milk having a fat content of 3% and containing 2 g/l yeast extract, 2 g/l hydrolyzed casein and 1 g/l 1-cystein and having been heat treated at 115°C for 30 minutes, was inoculated with 0.1 l Bifidobacterium adolescentis, whereupon the culture was allowed to grow at 35°C for 42 hours after which the bacterial content had increased to $0.6 \times 10^9$ per ml. Depending on the long lasting temperature treatment at the relatively high temperature, the milkculture was brownish and proved to have scaling flakes from burnings on the glas distributed in the milk. The said flakes could appear in the ready product prepared from the intermediate culture. Therefore it is considered suitable to UHT-treat the milk before the culture is allowed to grow.

Intermediate Culture 3

An intermediate culture was prepared in that 5 l milk having a fat content of 0.5 % and having the same additives as the intermediate culture 2, was UHT-treated at 140°C and was inoculated with 0.1 l Bifidobacterium breve, whereupon the culture was allowed to grow at 42°C for 35 hours, whereafter the bacterial content had increased to $0.4 \times 10^9$ per ml. The intermediate culture was of good quality.

Intermediate Culture 4

An intermediate culture was prepared in that 5 l milk having a fat content of 1% and having the same additives as intermediate culture 2 was UHT-treated at 140°C and was inoculated with 0.1 l mother culture of Bifidobacterium longum. The organism is slow growing and it was necessary to allow the intermediate culture to grow for 40 hours at 37°C to obtain the intended bacterial count of $0.5 \times 10^9$ per ml. The intermediate culture was of good quality.

Intermediate Culture 5

An intermediate culture was prepared in that 10 l skimmed milk, having an additive of 1 g/l yeast extract and having been UHT-treated at 140°C, was inoculted with 0.1 l mother culture of Streptococcus faecium. The intermediate culture was grown at 37°C, and already after 15 hours the bacterial content had increased to $0.7 \times 10^9$. S. faecium can be considered relatively quick growing and might aside of the invention, be used as conventional for producing the intended processed milk, but it may also preferably be used in accordance with the invention.

II PRODUCING A BULK STARTER CULTURE

A bulk starter culture suited for preparing a milk product as intended with the invention is prepared by culturing according to the invention an intermediate culture of the type described above or any commercialy available intermediate culture. There are industrially manufactured intermediate cultures in the market, which are suitable for preparing the intended type of milk product. Some of said commercially available cultures are relatively quick growing and when using such cultures the substantial advantages, as when using slow growing micro oganisms for which the invention has been made, are not obtained.

In the following are described the preparation according to the invention of four different bulk starter cultures of Lactobacillus acidophilus the neotype strain (intermediate culture 1), two different types of bulk starter culture of B. adolescentis (intermediate culture II), a bulk starter culture of B. breve (intermedate culture 3), a bulk starter culture of B. longum (intermediate culture 4) and a bulk starter culture of S. faecium (intermediate culture 5).

Bulk Starter Culture 1

For preparing a bulk starter culture of Lactobacillus acidophilus, 990 l skimmilk was prepared, which milk had a fat content of 0.06% and a protein additive of skimmilk protein powder, which gave the milk a protein content of 4 g/100 g, and which further contained a growth simulant in form of 0.4 g/l of a yeast extract. The milk was heat treated according to the UHT-method by direct injection of steam of 140°C temperature. After the steam had been removed from the milk, the temperature was lowered to 37°C and the milk was supplied to a bulk starter culture tank, which had been sterilized by heat treatment by high pressure steam of 135°C for 30 minutes. The milk was inoculated with 10 l intermediates culture "1" of L. acidophilus and maintained at a temperature of 37°C. After 20 hours the intended bacterial content of $1.3 \times 10^9$ per ml had been reached at pH 4.7, and the bulk starter culture was ready for use for preparing the intended processed milk.

In this case a sterile culture was grown in a sterilized substrate in a sterile tank, whereby an infection free bulk starter culture having a high content of the bacteria L. acidophilus was obtained.

Bulk Starter Culture 2

A bulk starter culture was prepared similarly, in that 990 l milk having a fat content of 0.5% and having an addition of a growth medium of 4 g/l yeast extract was inoculated with 1% intermediate culture "1" of L. acidophilus. The total protein content of the prepared milk was 3.4 g/100 g. The bulk starter culture tank was sterilized like above, and the prepared milk was UHT-treated at 130°C by indirect heating and was supplied to the bulk starter tank. After the culture had grown for 16 hours at 37°C, the bacterial content was 0.9 x $10^9$ per ml at pH 4.5.

In this case the substrate was sterilized by indirect UHT-treatment in a special heat exchanger for some seconds. Depending on the relatively high amount of yeast extract, this can be supplied to the processed milk via the bulk starter culture. The culture was allowed to grow under sterile conditions and resulted in an infection free bulk starter culture having a relatively high amount of L. acidophilus.

Bulk Starter Culture 3

A bulk starter culture was prepared from milk having a fat content of 0.5% and having an addition of skimmilk powder giving the milk a protein content of 3.8 g/100 g. A starter culture tank was prepared by being normally cleaned and disinfected by steam injection. The milk was UHT-treated like in the above examplified bulk starter culture 1 and was inoculated with 1% intermediate culture "1", L acidophilus., whereupon the culture was allowed to grow at 37°C. After 19 hours it had reached a bacterial content of 1.2 x $10^9$ per ml at pH 4.6.

Also in this case the substrate was sterilized by UHT-treatment and the culture was grown under sterile conditions. In this case the bulk culture tank was of conventional dairy tank type, and the tank was cleaned and disinfected as conventional and it was steam treated at 105°C for 30 minutes. By this treatment the tank did not become sterile. No coliforms were observed in the ready bulk starter culture but about 100 bacillus per ml. The bulk starter culture had a normal taste and consistency.

Bulk Starter Culture 4

A bulk starter culture was prepared like the above culture 3 but from milk having a fat content of 1 %. The bulk starter culture tank was sterilized by means of high pressure steam of 135°C for 30 minutes and the milk was treated in the sterilized tank by tyndallization and the milk was inoculated with 10 l (1%) intermediate culture "1", L. acidophilus. After the culture had grown for 19 hours at 37°C it had a bacterial content of 0.9 x $10^9$ per ml at pH 4.6.

The bulk starter culture tank had been sterilized, like for bulk starter culture 1 and 2, but the substrate was only heat treated, by so called tyndallization, whereby the milk was heated in the tank to 95°C and was cooled to 37°C and was allowed to stand for two hours. The heat treatment process was repeated twice, whereupon the milk was inoculated with intermediate culture 1. The content of bacteria of the type L. acidophilus was relatively high. No coliforms were observed, but on the contrary, the culture had about 10,000 bacillus per ml. The bulk starter culture had normal taste and consistency.

Bulk Starter Culture 5

A bulk starter culture was prepared in that 290 l milk having a fat content of 1%, received an addition of skimmilk powder giving a protein content of 3.8 g/100 g and an addition of 5 g/l of a yeast extract. A bulk culture tank was sterilized with high pressure steam of 135°C for 30 minutes. The milk was UHT-treated by an indirect method at 140°C and was inoculated with 10 l intermediate culture 2, Bifidobacterium adolescentis corresponding to an inoculation of 3%, and it was supplied to the tank. The milk was grown at 35°C and after 40 hours the bacterial content had increased to 0.8 x $10^9$ at pH 4.8.

The culture was grown sterile in UHT-treated milk in a sterile tank and gave an infection free bulk starter culture obtaining a high bacterial content after a reasonable growth time.

Bulk Starter Culture 6

A bulk starter culture was prepared substantially as described in connection to bulk starter culture 5 from 190 l milk having a fat content of 1% and an addition of 10 g yeast extract per liter. The protein content was 3.7 g/100 g. The bulk starter culture tank was sterilized with high pressure steam of 135 °C for 30 minutes. The milk was heat treated by tyndallization as described in connection to the above culture 4. After the temperature has been lowered to 37 °C the milk was inoculated with 10 l B. adolescentis, corresponding to an inoculation amount of 5% and grown at 37°C. After 34 hours the culture had reached a bacterial content of 0.9 x $10^9$ at pH 4.3.

The culture was grown in a sterile tank but in tyndallized, non-sterile milk. The result was a strongly infected bulk starter culture containing more than one million contaminating bacteria per milliliter having a non-typical bitter taste. Obviously tyndallization of the milk is not sufficient for effectively killing such contaminating bacteria which in this case gave the non wanted effect.

Bulk Starte Culture 7

A bulk starter culture was prepared by 190 l milk having 3% fat content and an addition of whey proteins giving a milk protein content of 4.0 g/100 g, and 5 g/l yeast extract was added to the milk. A bulk starter culture tank was prepared by being sterilized at 135°C for 30 minutes, and the prepared milk was UHT-treated at 130°C by an indirect method. After the temperature had been lowered to 42°C the milk was inoculated with 10 l intermediate culture 3, B. breve, corresponding to 5% inoculation, and the culture containing milk was grown at maintained temperature at 42°C. After 32 hours the amount of B. breve bacterial had increased to $0.7 \times 10^9$ at pH 4.7, whereby the process was ended.

The culture was grown sterile in a sterile tank and gave an infection free culture having high bacteria content in relatively short time.

Bulk Starter Culture 8

A bulk starter culture was prepared by 190 l milk having a fat content of 0.5 % and an addition of 2 g/l yeast extract. The protein content of the milk was 3.4 g/l. The culture tank was sterilized, also in this case by means of high pressure steam at 135°C for 30 minutes. The milk was UHT-treated by direct injection of steam of 145°C, whereupon the milk was inoculated with 10 l intermediate culture 4, Bifidobacterium longum, corresponding to 5% inoculation. The culture was grown at a temperature of 39°C for 32 hours, after which the bacterial content was $0.6 \times 10^9$ at pH 4.6.

The culture was grown sterile in a sterile tank and was free from infections.

Bulk Starter Culture 9

A bulk starter culture was prepared by 290 l milk having a fat content of 3% and a protein content of 3.4 g/100 g milk. The culture tank was sterilized by high pressure steam of 120°C for 60 minutes, whereupon the milk was UHT-treated at 140°C by direct steam injection. The milk was inoculated with 10 l intermediate culture 5, Streptococcus faecium corresponding to 3% inoculation. The culture was allowed to grow at 37°C for 18 hours after which the content of S. faecium bacteria was $0.7 \times 10^9$ at pH 4.6.

The culture was grown sterile in a sterile tank and gave in a short time an infection free bulk starter culture having a high content of the intended bacteria.

III PREPARING A PROCESS MILK BATCH

In the following a number of examples are given of how to prepare the intended process milk batch, using the above described bulk starter cultures.

Example 1

From 0.2 l motherculture of the strain Lactobacillus acidophilus, National Collection of Dairy Organisms, Reading, GB, No. 1748, an intermediate culture was prepared, as described in connection to bulk starter culture 1 above, by cultivation in skimmilk, having a pH value of 6.6 and an addition of 1 g yeast extract per liter. Prior to inoculation, the milk was subjected to an UHT-treatment at a temperature of 140°C by injecting high pressure steam into the milk. The steam was removed and the milk was cooled to 37°C and the bacterial culture was allowed to grow at said temperature for 30 hours, whereby the bacterial content had increased to $0,6 \times 10^9$ per ml. The pH value of the ready intermediate culture was 4,6.

From the intermediate culture, a bulk starter culture was prepared in larger scale according to any of the examples of bulk starter culture 1-4 by cultivation in milk having a fat content of 0,5 % and a protein content of 3,4% and containing 4g/l yeast extract as a growth medium for the bacteria culture. The milk mixture was heat treated according to the UHT-process by injection of steam at 140°C and subsequent removal of the steam, and the sterilized milk was cooled to 37°C. 1% of the intermediate culture was added and the milk mixture was maintained in a sterilized container of 1,000 liter located in a chamber having a temperature of 37°C, whereby also the milk mixture obtained the temperature of 37°C. The culture was allowed to grow for 16 hours, after which the bacterial content had increased from $8 \times 10^6$ to $0,9 \times 10^9$ per ml. The bulk starter culture had a pH value of 4,5.

A tank was prepared for manufacture of the ready product by being carefully cleaned and disinfected, and subsequently the tank was steamed for 30 minutes under normal pressure. The tank, which had a volyme of 10,000 liter, was filled with 9,700 l milk having a fat content of 0,5% and a protein content of 3,4%, which for buffering purpose was increased to 5,0% by adding skim milk protein powder having 65% protein as calculated on the dry matter content. The process milk was homogenized and was heated to 95°C and was maintained at said temperature for 5 minutes, whereby the whey proteins were denaturated. 0,4g/l yeast extract, in the form of a 20% water solution, was added to the heat treated milk and the prepared process milk was UHT-treated as described above at a temperature of 140°C, it was homogenized according to known method and it was cooled to 37°C. 300 litre active bulk starter culture No. 1, Lactobacillus acidophilus the neotype strain was added to 9,700 liters of the sterilized process milk, corresponding to 3% inoculation. Depending on the buffering addition of skim milk protein, the growth time for the bacterial culture had been increased, so that a product having a suitable bacteria content had been obtained after 20 hours growth time. The pH value of the ready product was 4,6 and the bacterial content was $2,5 \times 10^9$. The product was cooled and packed as conventional.

The ready product had a strongly sour taste of L. acidophilus, a consistency eqivalent to fermented milk products prepared from milk having 3% fat content and a clearly white colour. The amount of contaminating bacteria was less than 1,000 per ml and the number of bacillus cereus like the content of coliforms was less than 10 per ml.

After storing for 10 days the bacterial culture proved to have a comparatively good survival, and the amount living bacteria decreased only slightly during the storing period.

## Example 2

A process milk batch was prepared from milk having 0.5% fat content and a protein content of 3.4 g/l and having an addition of 0.3 g/l of a yeast extract. A culture tank was prepared like in example 1, and 8,800 l of the milk was tapped into the tank and was UHT-treated like in example 1 and was inoculated with 1,200 l bulk starter culture No. 1 L. acidophilus, corresponding to 12% inoculation amount. After a growth time of 16 hours at 37°C, the amount of L. acidophilus bacteria had increased to $0.9 \times 10^9$. The pH-value was 4.7.

The manufacture was made substantially like in example 1, but the amount of inoculated bacteria was substantially higher and the protein content was less. Therefore a lower bacterial content was obtained at a shorter growth period. Like in example 1, the product was free from infections and had a very little content of contaminating bacteria.

## Example 3

A process milk batch was prepared from milk having 0.5% fat content and which was protein fortified by an addition of ultrafiltered skimmilk having 22% dry matter content and 40% protein of the dry matter content which gave the milk a protein content of 5.0 g/100 g milk.

A processed tank was prepared like in example 1 and 7,800 liter of the milk was UHT-treated like in example 1 and was inoculated with 2,200 litre bulk starter culture No. 1, L. acidophilus, corresponding to 22% inoculation amount. The culture was grown at 40°C for 15 hours after which the bacteria content was $2.4 \times 10^9$. The pH of the product was 4.5.

The milk had a higher protein content than in example 2 and a higher inoculation amount than in examples 1 and 2, and an infection free product was obtained which had a high bacterial content and a satisfactory taste, appearance and consistency obtained at relatively short period of time.

## Example 4

A process milk batch was prepared substantially like in example 1 by milk which had a fat content of 1% and was protein fortified to a protein content of 4,0g/100 g milk by an addition of ultrafiltered whey having 20% dry matter content and 50% protein as calculated on the dry matter content.

A process tank was prepared like in example 1 and 9,900 litre of the milk was UHT-treated like in example 1 and was inoculated with 100 liter bulk starter culture No. 1, L. acidophilus, corresponding to an inoculation amount of 1%. The culture was grown at 42°C for 28 hours, whereby the bacterial content had increased to $0,7 \times 10^9$. The pH value was 4,7.

In this example there were the same growth conditions like in example 1, but the inoculation amount was only 1%. This gave a growth time of 28 hours to reach pH 4,7, and the content of L. acidophilus became relatively low. The amount of Bacillus cereus was more than 100 000 per ml, since spores of this bacteria survive the actual disinfection of the process tank and since the growth time was fairly long depending on the low inoculation amount. According to actual Swedish stipulations amounts of B. cereus exceeding 10 000 per ml means that the product is unsuitable as human food. According to the invention there is obviously a need of a higher inoculated amount of bulk starter culture.

## Example 5

A process milk batch was pepared like in example 4 but for the difference that the milk was inoculted with 35% bulk starter culture No. 1 of L. acidophilus and that the protein content was increased to 5.0 g/100 g milk. The culture was grown at 40°C, and after ten hours it had reached an amount of L. acidophilus of $2.3 \times 10^9$ and a pH value of 4.7.

In this example a very heavy inoculation amount was used, and therefore the growth time was very short. Depending on the quick growth, there was no need for having the culture grow in specially treated milk, but the cultivation advantageously could be made in the conventional way. The product was free from infection, but had a quite unacceptable consistency, depending on the fact that the protein was flaky when the process milk and the inoculation culture were mixed, since the pH value of the mixture did not exceed 5.7. A further disadvantage of such heavy inoculation amount is, that the amount of product does not increase equivalently to the increased amount of inoculation culture, and therefore the method is expensive.

Example 6

A process milk batch was prepared like in example 5 from milk which had 3 % fat content and which had a fortified protein content of 5.0 g/100 g milk, and the milk was inoculated with 10% bulk starter culture No. 1 L acidophilus.

There were the same growth conditions like in example 1, but with the difference that the substrate had not been UHT-treated but heat treated as conventional within this technical field at 95°C for 5 minutes. It proved that the content of Bacillus species was 5 millions per ml and that the content of Bacillus cereus was 50,000 per ml. The product had a strong off flavour, and depending on the high amount B. cereus the product was unsuitable as human food.

Example 7

A process milk batch was prepared substantially as in example 6 from milk which had 3% fat content and a fortified protein content of 5 g/100 g milk and an addition of 0.4 g/l of a yeast extract. In this case the process tank was carefully cleand and disinfected in the usual way, but it was not subjected to any special disinfection procedure. The milk was UHT-heat treated by direct injection of high pressure steam of 135°C. After the temperature had been lowered to 34°C, the milk was inoculated with 10% bulk starter culture No. 1 of L. acidophilus and was grown for 17 hours. The bacterial content was measured to $2.2 \times 10^9$ at pH 4.6. There were the same growth conditions like in example 1, but with the difference that the process tank had only become cleaned and disinfected as normal, without having been extra disinfected by a steam disinfection or cold disinfection process. The grown culture was free from fault, but the product had a content of Bacillus cereus of 8,300 per ml. Amounts of B. cereus of between 1,000 and 10,000 are considered unsatsifactory. After the culture had been grown once again, the amount of B. cereus was measured to slightly over 10,000 and the product was considered unsuitable. Obviously Rnormal cleaning and disinfection of the process tank is not sufficient, when growing such slow growing bacteria as intended with the present invention.

Example 8

A process milk batch was prepared substantially as in example 7 from milk having a fat content of 3 % and a protein content of 3,4 g/100 g milk. The process tank was disinfected with high pressure steam like in example 1, and the milk was UHT-treated by an indirect method at 140°C and was inoculated with 14% bulk starter culture No. 1, L. acidophilus. The culture was grown at 49°C for 29 hours, after which the bacterial content had increased to $0.3 \times 10^9$. The pH-value was 4.9.

There were the same growth conditions like in example 1, except that the incubation took place at a higher temperature. In spite of 29 hours growth time, the bacterial content was substantially less than in example 1, and the pH value did not reach the intended low value of 4.7, at which the product, according to experience, has acceptable taste and consistency. The amount of contaminating bacteria was $0.1 \times 10^9$, and the taste was unacceptable. An important part of the contaminating bacteria were Clostrides causing a gas formation in the tank. The reason for the unacceptable result is probably that the high growth temperature favours the growth of contaminating bacteria, surviving the disinfection of the product tank and having a quicker growth rate than the slow growing L. acidophilus bacteria, and that said L. acidophilus bacteria hence was inhibited by the high temperature.

Example 9

A process milk batch was prepared like in example 7, from skimmilk having 0.06% fat content and a fortified protein content of 5 g/100 g milk and containing 0.4 g/l of a yeast extract.

The process tank was disinfected and the milk was UHT-treated like in example 7 and was also in this case inoculated with 14% bulk starter culture No. 1, L. acidophilus. The culture was grown at 29°C, and after 32 hours the content of L. acidophilus had reached $0.3 \times 10^9$. The pH-value was 5.2.

In this case, the culture was grown at substantially less temperature than in example 7. In spite of the very long growth time the pH-value decreased only to 5.2 and the milk did not coagulate. The content of Bacillus cereus exceeded 100,000 per ml and the product was unsuitable as human food. The reason that the result was unacceptable is, that the growth time was too long.

Example 10

A process milk batch was prepared like in example 9, from milk having 1% fat content and a strongly fortified protein content of 10 g/100 g milk and containing 0.4 g/l of a yeast extract. The process tank was sterilized and the milk was UHT-treated like in example 9, and the milk was inoculated with 10% bulk starter culture No. 1, L. acidophilus. The culture was grown at 38°C, and after 36 hours the content of L. acidophilus had reached a level o $0.2 \times 10^9$. The pH-value was 5.4.

In this example, the milk had a very high protein content and the total dry matter content was 20 g/100 g milk. In spite that the culture was grown for 36 hours, the pH-value did not become lower than 5.4 and the bacterial content was remarkably low. The amount of contaminating bacteria like the taste and consistency was unacceptable. The reason therefore is, that the protein content obviously was too high, so that the bacteria L. acidophilus was not capable of lowering the pH-value sufficiently, since the protein gives a heavy buffer effect and that the growth of L. Racidophilus was inhibited depending on the high dry matter content of minerals, lactose and protein.

Example 11

A process milk batch was prepared like in example 1 from skimmilk, which had a fat content of 0.06% and which was protein fortified to a protein content of 7 g/100 g milk by addition of skimmilk powder having 35% protein content of the dry matter. The total dry matter content thereby was 21 g/100 g, 10 g of which was lactose. The milk obtained an addition of a growth stimulant in the form of 0.4 g/l of a yeast extract.

The proccess tank was sterilized like in example 1 and the milk was UHT-treated by an indirect method at 140°C and was inoculated with 17% bulk starter culture No. 1, L. acidophilus.

The substrate was grown a 37°C for 34 hours, after which the content of L. acidophilus had increased to $0.3 \times 10^9$. The pH-value was 5.3.

In spite of such long growth time as 34 hours, the pH-value did not decrease to more than 5.3 and the bacterial content was remarkably low. The reason is, that the high protein content of the substrate combined with the low water activity, mainly caused by lactose and minerals, which obviously inhibit the growth of the L. acidophilus bacteria. The product was unacceptable.

Example 12

A process milk batch was prepared like in example 1, from skimmilk having 0.06 % fat content and a fortified protein content of 7 g protein/100 g milk, obtained by an addition of skimmilk protein powder in which 50% of the dry matter was protein. This gave a total dry matter content of 15 g/100 g milk. The milk was given an addition of 0.4 g/l of a yeast extract.

The process tank was sterilized like in example 11 and the milk was inoculated with 17% bulk starter culture No. 1, L. acidophilus, and was grown like in example 11. After 22 hours at 37°C the amount of L. acidophilus had increased to 2.8 x $10^9$ and the pH-value was 4.7.

In this example the total dry matter content was less and the culture grew quicker than in example 11. The content of bacillus was 10,000 per ml, 120 per ml of which was B. cereus. The product had a satisfactory taste and a thick, smooth consistency, and as a whole the product was acceptable.

Example 13

A process milk batch was prepared like in example 1, from milk having 3% fat content, which was protein fortified by an addition of a mixture of a skim milk protein powder and whey protein powder giving a protein content of 4.5 g per 100 g milk. In this case the milk did not get any addition of yeast extract.

The process tank was sterilized and the culture substrate was UHT-treated like in examples 11 and 12, and the milk was inoculated with 25% bulk starter culture No. 1, L. acidophilus, and was grown at 37°C for 23 hours. The pH-value became 4.7 and the content of L. acidophilus was $1.8 \times 10^9$. In this example the milk was heavily inoculated, but since there was no addition of yeast extract in the process milk, the culture grew slowly. The content of contaminating bacteria was 1,000 per ml, 320 of which was B. cereus. The taste, consistency and bacteria content was satisfactory.

In the above examples 1-13 the product has been grown with bulk starter culture No. 1, L. acidohpilus. The following examples disclose the use of the bulk starter culture 2, 3 and 4 which likewise are of the specie L. acidophilus but which have been prepared in slightly different ways.

Example 14

A process milk batch was prepared substantially as in example 1, from skimmilk having 0.06 % fat content and being protein fortified to a protein content of 3.8 g/100 g milk, by an addition of whey powder having 20% protein as calculated on the dry matter content. There was no addition of yeast extract to the skimmilk, but by the inoculated culture 0.7 g/l yeast extract was supplied.

The process tank was sterilized like in examples 11-13 and the growth substrate was UHT-treated, likewise as in examples 11-13, and the milk was inoculated with 17% bulk starter culture No. 2, Lactobacillus acidophilus, neo-type strain. The culture was grown at 37°C. After 16 hours the pH-value had dropped to 4.5 and the content of L. acidophilus was $1.2 \times 10^9$.

Since the bulk starter culture had been grown with high content of yeast extract the process substrate obtained a correspondingly high content. Thereby the handling is simplyfied. The product was free from infection and had a satisfactory taste, consistency and content of the intended bacterial type.

Example 15

A process milk batch was prepared from skimmilk which had 0.06% fat content and which was protein fortified like in example 1, to a protein content of 5.0 g/100 g milk. Further, the milk contained 0.4 g/l of a yeast extract.

The process tank was sterilized and the milk was UHT-treated like in examples 11-14. In this example the milk was inoculated with 17% bulk starter culture No. 3, Lactobacillus acidophilus, neo type strain, and the culture was grown a 36°C for 12 hours. The content of the intended bacteria thereby was $0.8 \times 10^9$ and the pH-value was 4.4.

The bulk starter culture No. 3 contained about 100 bacillus per ml, which by the inoculation was transferred to the milk. Depending on the high growth speed, they dominated the growth process, so that pH had dropped to less than 4.4 already after 12 hours and the content of bacillus was higher than 100 millions. The product had a strongly whey emitting coagulum and it had an unsatisfactory bitter taste.

Example 16

A process milk batch was prepared from skimmilk having 0.06 % fat content, and the milk was protein fortified like in example 1, to a protein content of 5.0 g/100 g milk. The milk had an addition of 0.4 g yeast extract per liter milk.

The process tank was sterilized like in examples 11-14, and the milk was inoculated with 17% Lactobacillus acidophilus, neo-type strain and the substrate was allowed to grow at 35°C. After 10 hours the pH-value had dropped to 4.6 and the content of the intended bacteria had increased to $0.6 \times 10^9$.

The bulk starter culture No. 4 had been grown in tyndallized milk and it contained about 10,000 bacillus per ml. Like in example 15, the contaminating bacteria quickly became predominating, and already after 10 hours growth time, the pH-value had dropped to 4.6 and the product thereby contained more than 100 millions bacillus per ml and was quite unacceptable.

In the above examples, the process milk batch has been prepared using the slow growing bacteria L. acidophilus, but also other types of slow growing bacteria can be used, as can be examplified in the following. It should be noted, that also quick growing bacteria can be used in the method according to the invention, but in such case, the method may be considered uneconomical and the invention is especially advantageous when growing bacteria having slow growth capacity.

Example 17

A process milk batch was prepared like in example 1, from milk which had a fat content of 3%, which was protein fortified by an addition of skimmilk protein powder giving a protein content of 5 g/100 g milk. No growth stimulant was added, but by the bulk starter culture the milk obtained a slight amount of yeast extract. The process tank was sterilized by careful cleaned and subsequent disinfection by means of steam, so that the tank became sterile. The milk mixture was UHT-treated by indirect method (heat exchanger) at 140°C, and the milk was inoculated with 10 % bulk starter culture No. 5, Bifidobacterium adolescentis, and the substrate was grown at 36°C. After the culture had grown for 20 hours the pH had dropped to 4.7 and the content of B. adeloscentis had increased to $0.9 \times 10^9$.

In this example, the milk was inoculated with 10% of the infection free bulk starter culture B. adolescentis, and the culture was grown in UHT-treated bacteria free milk (3% fat content). By the bulk starter culture, the milk obtained an addition of yeast extract in an amount of 50 mg/l. The culture grew relatively quickly, and the content of bacillus was low, less than 500 per ml. The processed milk, which had an acetic acid aroma which is typical for the Bifidus milk, was quite satisfactory.

Example 18

A process milk batch was prepared like in example 17, from skimmilk having less than 0.1 g fat content and being protein fortified like in example 17, to a protein content of 5 g/100 g milk. The milk got an addition of 1 g yeast extract per litre milk.

The process tank was sterilized and the milk was UHT-treated like in example 17. The milk was inoculated with 10% bulk starter culture No. 6, Bifidobacterium adolescentis, and the substrate was grown at 38°C for 10 hours, whereafter pH was 4.5 and the bacteria content was $0.3 \times 10^9$.

Already from the beginning, the bulk starter culture No. 6 had a very high content of foreign bacteria, since said culture had been grown in a non-bacteria free milk. The said contaminating bacteria became predominant over the slow growing Bifidobacteria and already after 10 hours the milk had been acidified. The taste, consistency and amount of contaminating bacteria of the product, was quite unacceptable.

Example 19

A process milk batch was prepared from milk, which had 1% fat content and which was protein fortified by an addition of skimmilk powder so that the protein content was 4 g/100 g milk.

The process tank was sterilized like in examples 17 and 18 and the milk mixture was UHT-treated by direct steam injection at 140°C. After the steam had been removed and the temperature had been lowered to 38°C, the milk was inoculated with 17% bulk starter culture No. 7, Bifidobacterium breve, and the substrate was grown at 38°C for 18 hours, whereafter pH was 4.8 and the content of bacteria was 0.7 x 10⁹.

The content of contaminating bacteria was less than 100 per ml and the product had a typical taste and an acceptabel consistency.

Example 20

A process milk batch was prepared like in example 1, from milk having 1% fat content and a non-fortified protein content of 3.6 g/100 g milk. Yeast extract was added in an amount of 5 g/l milk. The process tank was sterilized like in examples 17-19, and the milk was heat treated as normally within this technical field at 95°C for 5 minutes and was thereafter inoculated with 17% bulk starter culture No. 7 Bifidobacterium breve. The substrate was grown at 40°C, and already after 8 hours, pH had dropped to 4.6. The bacterial content was 0.8 x 10⁹.

In this example, the milk was subjected to a normal heat treatment before the culture was grown, and, in spite that the bulk starter culture was free from infection and was added in a high amount bacillus grew quickly and had already after 8 hours reached a content of more than 100,000 per ml, 6,300 per ml of which was Bacillus cereus. Therefore the product was not acceptable, and further it had a strong yeast taste and insufficient consistency depending on protein flaking.

Example 21

A process milk batch was prepared like in example 1, from a mixture of two parts skimmilk and one part whey. The fat content was less than 0.1 g/100 g. The milk mixture obtained an addition of in total 0.6 g yeast extract per liter.

The process tank was sterilized like in examples 17-20 and the milk mixture was UHT-treated by direct injection of steam of 140°C, and thereafter the milk mixture was inoculated with 7% of the infection free bulk starter culture No. 8, Bifidobacterium longum. The substrate was grown at 42°C, and after 17 hours it had reached a pH-value of 4.6. The bacterial content was 0.5 x 10⁹.

The coagulated process milk had a typical taste and a content of contaminating bacteria of 900 per ml. The content of Bacillus cereus was less than 100 per ml and the product had a good quality.

Example 22

A process milk was prepared like in example 1, from milk having 3% fat content. Skimmilk protein powder was added so that the protein content of the milk was 4 g/100 g milk. No growth stimulating agent was added. The process tank was carefully cleaned and disinfected by a subsequent steam process. The milk was UHT-treated by direct injection of steam of 140°C and was thereafter inoculated with 8% of the bulk starter culture No. 9 Streptococcus faecium. The milk was fermented at 37°C, and after 14 hours pH had dropped to 4.6 and the bacterial content was 1.3 x 10⁹.

The process milk had coagulated and had a pure milk sour taste. The content of contaminating bacteria was less than 100 per ml, and the product was of good quality.

In all of the above examples the process milk has been inoculated only with a specific strain of slow growing bacteria. The manufacturing techniques according to the invention, however, is also advantageous if more than one strain or specie is used, but preferably all strains should be slow growing.

Example 23

A process milk was prepared from milk having 3% fat content and having an addition of yeast extract in an amount of 0.4 g/l. The milk was protein fortified by an addition of sodiumcaseinate to a protein content of 4 g/100 g milk. The process tank was carefully washed and disinfected with a preparation available on the market and comprising hydrogene peroxide, peracetic acid and acetic acid. The disinfection solution was circulated for 30 minutes and was thereafter allowed to stand until the equipment was used. Thereby the solution was drained and the equipment was rinsed with a bacteria poor, rinsing water having less than 1 bacteria/ml.

The UHT-treated milk was supplied to the tank and was inoculated with 3% of bulk starter culture No. 1, L. acidophilus and 5% of bulk starter culture No. 5 B. adolescentus and 5% of bulk starter culture No. 7 B. breve. The milk was maintained at 36°C, and after 18 hours pH had dropped to 4.7.

The content of lactic bacillus was $0.9 \times 10^9$ per ml and the content of Bifidobacteria was $0.4 \times 10^9$.

In spite of the minor inoculation amount of L. acidophilus, said bacteria became dominating in the product, since they grew somewhat quicker than the Bifidobacteria. The later bacteria, however, were present in a sufficient amount. The product had a satisfactory taste which was not as acetic sour as in examples 17, 19 and 21. The content of contaminating bacteria was less than 1,000 per ml, and as a whole, the product was considered satisfactory.

## Claims

1. A method of cultivating, in milk, organism having a slow growth capacity (Lactobacillus acidophilus, certain types of Bifidobacteria, Streptococcus faecium), **charaterzied** in that

    a bulk stater culture is prepared in that milk is heat treated according to an UHT (Ultra High Temperature) process to a temperature of about 140°C and is supplied to a sterilized tank over a sterile equipment,

    an amount of said organism having the slow growth capacity is admixed to the UHT treated milk under known sterile conditions,

    the mixture is kept at optimum growth temparature for the actual organism, and the organism is allowed to grow until the bulk starter culture has reached a pH value of about 4.5-5.0 corresponding to a growth period of 14-48 and whereby a bacterial content of more than $10^8$ per ml has been obtained,

    and parallelly thereto a process milk batch is prepared, which may include additives, and which comprises milk which has preferably been heat treated by any known method in order to denaturate whey proteins, has been homogenized and might have been given additives like yeast extract and protein preparations, and which has thereafter been UHT-treated and transmitted to an ordinary product tank, which has been carefully cleaned and disinfected,

    whereupon the bulk stater culture is admixed to the process milk batch in an amount of 2.5 - 25% the amount preferably being calculated for a growth period of 14-24 hours,

    and the milk/bulk starter culture mixture is maintained at the optimum growth temperature of the bacterial culture, and the culture is allowed to grow until a pH value of about 4.5-4.7 has been reached, whereby the bacteria content of the ready product is at least $10^8$ per ml, whereby the process is interrupted and the product is cooled and packed.

2. A method according to claim 1, **characterized** in that the bulk starter culture is preferably added to the process milk batch in an amount of 5-20%.

3. A method according to claim 1 or 2, **characterized** in that the yeast extract of the process milk batch is admixed in an amount of 0.1-2 g per litre milk.

4. A method according to any of the preceding claims, **characterized** in that the protein preparation is added to the process milk batch in an amount of 3-36 g protein per kg milk, however so that the total amount of non-fat dry matter does not exceed 180 g per kg milk.

5. A method according to claim 4, **characterized** in that the protein preparatiion is a milk protein like skim milm protein, whey protein, butter milk protein, casein or mixtures thereof in powder for or in liquid form.

6. A method according to claim 4 or 5, **characterized** in that the protein contect of the admixed protein preparation is at least 15% of the dry matter content.

7. A method according to any of the preceding claims, **characterized** in that the growth of the organism is proceeded until the bacterial content of the ready product is higher than $2 \times 10^8$ per ml, and after having been stored for 10 days and nights at +8°C is higher than $3 \times 10^7$ per ml.

8. A method according to any of the preceding claims, **characterized** in that the yeast extract is added to the bulk starter culture and is admixed to the process milk batch by inoculation.

9. A method according to claim 8 and any of claims 1-7, **characterized** in that the main amount of yeast extract is added to the bulk starter culture, and that a slight amount of yeast extract is added to the process milk batch.

10. A method according to claim 8 or 9, **characterized** in that the yeast extract is admixed in such amount, that the yeast extract content of the inoculated process milk batch amounts to 0.1- 2 g per litre milk.

11. A method according to any of the preceding claims, **characterized** in that the UHT treated milk is inoculated with a mixture of several different bulk starter cultures containing different strains or species of the said bacterial, which preferably are of slo growing types.

## Revendications

1. Procédé de culture, dans du lait, de micro-organismes ayant une capacité de croissance lente (Lactobacillus acidophilus, certains types de Bifidobactéries, Streptococcus faecium), caractérisé en ce que

un levain industriel est préparé par traitement thermique du lait par un procédé UHT (ultra-haute température), à une température d'environ 140°C, et introduction dans un réservoir stérilisé par passage dans une installation stérile,

une quantité dudit micro-organisme ayant une capacité de croissance lente est mélangée au lait traité par le procédé UHT, dans des conditions de stérilité connues,

le mélange est maintenu à la température optimale de croissance du micro-organisme présent et le micro-organisme est laissé en croissance jusqu'à ce que le levain industriel ait atteint une valeur de pH d'environ 4,5 à 5,0 correspondant à un temps de croissance de 14 à 48 heures, permettant d'obtenir une teneur en bactéries supérieure à $10^8$ par ml,

et, parallèlement à cette opération, il est préparé un échantillon de lait à transformer, qui peut renfermer des additifs, et qui comprend du lait qui a été de préférence soumis à un traitement thermique par n'importe quel procédé connu afin de dénaturer les protéines du petit-lait, a été homogénéisé et auquel des additifs tels qu'un extrait de levure et des préparations de protéines peuvent avoir été ajoutés, et qui a été ensuite traité par le procédé UHT et introduit dans un réservoir usuel de stockage de produit, qui a été soigneusement nettoyé et désinfecté,

le levain industriel est ensuite mélangé à l'échantillon de lait à transformer, en une quantité de 2,5 à 25 %, la quantité étant de préférence calculée pour un temps de croissance de 14 à 24 heures,

et le mélange lait/levain industriel est maintenu à la température optimale de croissance de la culture bactérienne et la culture est laissée en croissance jusqu'à ce qu'une valeur de pH d'environ 4,5 à 4,7 soit atteinte, la teneur en bactéries du produit prêt à l'emploi étant d'au moins $10^8$ par ml, le procédé étant alors interrompu et le produit étant refroidi et conditionné.

2. Procédé suivant la revendication 1, caractérisé en ce que le levain industriel est de préférence ajouté à l'échantillon de lait à transformer en une quantité de 5 à 20 %.

3. Procédé suivant la revendication 1 ou 2, caractérisé en ce que l'extrait de levure destiné à l'échantillon de lait à transformer est mélangé en une quantité de 0,1 à 2 g par litre de lait.

4. Procédé suivant l'une quelconque des revendications précédentes, caractérisé en ce que la préparation de protéines est ajoutée à l'échantillon de lait à transformer en une quantité de 3 à 36 g de protéines par kilo de lait, cependant de sorte que la quantité totale de matière sèche non grasse n'excède pas 180 g par kg de lait.

5. Procédé suivant la revendication 4, caractérisé en ce que la préparation de protéines consiste en protéines du lait telles que les protéines du lait écrémé, les protéines du petit-lait, les protéines du babeurre, la caséine ou un de leurs mélanges sous forme de poudre ou sous forme de liquide.

6. Procédé suivant la revendication 4 ou 5, caractérisé en ce que la teneur en protéines de la préparation de protéines ajoutée est égale à au moins 15 % de la teneur en matière sèche.

7. Procédé suivant l'une quelconque des revendications précédentes, caractérisé en ce que la croissance du micro-organisme est mise en oeuvre jusqu'à ce que la teneur en bactéries du produit prêt à l'emploi soit supérieure à $2.10^8$ par ml et, après un entreposage pendant 10 jours et 10 nuits à $+8°C$, supérieure à $3.10^7$ par ml.

8. Procédé suivant l'une quelconque des revendications précédentes, caractérisé en ce que l'extrait de levure est ajouté au levain industriel et est mélangé, par ensemencement, à l'échantillon du lait à transformer.

9. Procédé suivant la revendication 8 et l'une quelconque des revendications 1 à 7, caractérisé en ce que la quantité principale d'extrait de levure est ajoutée au levain industriel et qu'une légère quantité d'extrait de levure est ajoutée à l'échantillon de lait à transformer.

10. Procédé suivant la revendication 8 ou 9, caractérisé en ce que l'extrait de levure est mélangé en une quantité choisie de sorte que la teneur en extrait de levure de l'échantillon de lait ensemencé s'élève à 0,1-2 g par litre de lait.

11. Procédé suivant l'une quelconque des revendications précédentes, caractérisé en ce que le lait traité par le procédé UHT est ensemencé avec un mélange de plusieurs levains industriels différents contenant des souches ou des espèces différentes desdites bactéries, qui sont de préférence des types de bactéries à croissance lente.

**Patentansprüche**

1. Verfahren zur Züchtung von Organismen mit einer geringen Wachstumskapazität (Lactobacillus acidophilus, bestimmte Arten von Bifidobakterien, Streptococcus faecium) in Milch,

**dadurch gekennzeichnet, daß**

eine Starterkulturmasse dadurch hergestellt wird, daß Milch in einem UHT (Ultrahochtemperatur)-Verfahren bis zu einer Temperatur von etwa 140°C wärmebehandelt und über eine sterile Einrichtung in einen sterilisierten Tank überführt wird,

unter bekannten Sterilbedingungen eine Menge dieser Organismen mit der langsamen Wachstumskapzität der UHT-behandelten Milch zugemischt wird,

die Mischung bei einer für den gegebenen Organismus optimalen Wachstumstemperatur gehalten wird und die Organismen wachsen gelassen werden, bis die Starterkulturmasse einen pH-Wert von etwa 4,5-5,0 erreicht hat, entsprechend einer Wachstumsperiode von 14 bis 48, und wobei ein Bakteriengehalt von mehr als $10^8$ pro ml erhalten worden ist,

und parallel hierzu eine Prozeßcharge Milch angesetzt wird, die Additive enthalten kann und Milch enthält, die vorzugsweise nach einem beliebigen, bekannten Verfahren wärmebehandelt wurde, um Molke-Proteine zu denaturieren, die ferner homogenisiert worden ist und mit Zusätzen, wie Hefeextrakt und Proteinzubereitungen versetzt worden sein kann, und die danach UHT-behandelt und in einen gewöhnlichen Produkttank überführtworden ist, der sorgfältig gereinigt und desinfiziert worden ist,

worauf die Starterkulturmasse der Prozeßcharge Milch in einem Anteil von 2,5-25% zugemischt wird, wobei der Anteil vorzugsweise für eine Wachstumsperiode von 14-24 Stunden berechnet ist,

und die Milch/Starterkulturmasse-Mischung bei der optimalen Wachstumstempertur der Bakterienkultur gehalten und die Kultur wachsen gelassen wird, bis ein pH-Wert von etwa 4,5-4,7 erreicht ist, wodurch der Bakteriengehalt des fertigen Produktes wenigstens $10^8$ pro

ml beträgt, woraufhin der Prozeß abgebrochen und das Produkt gekühlt und abgepackt wird.

2. Verfahren nach Anspruch 1, dadurch gekennzeichnet, daß die Starterkulturmasse der Prozeßcharge Milch vorzugsweise in einer Menge von 5-20% zugegeben wird.

3. Verfahren nach Anspruch 1 oder 2, dadurch gekennzeichnet, daß der Hefeextrakt der Prozeßcharge Milch in einer Menge von 0,1-2g pro Liter Milch zugemischt wird.

4. Verfahren nach einem der vorangegangenen Ansprüche, dadurch gekennzeichnet, daß die Proteinzubereitung der Prozeßcharge Milch in einer Menge von 3-36g Protein pro kg Milch zugesetzt wird, jedoch so, daß der Gesamtanteil nichtfetter Trockenmasse 180g pro kg Milch nicht übersteigt.

5. Verfahren nach Anspruch 4, dadurch gekennzeichnet, daß die Proteinzubereitung ein milchproteinartiges Magermilchprotein, Molkeprotein, Buttermilchprotein, Casein oder Mischungen daraus, in pulvriger oder in flüssiger Form, ist.

6. Verfahren nach Anspruch 4 oder 5, dadurch gekennzeichnet, daß der Proteingehalt der zugemischten Proteinzubereitung wenigstens 15 % des Trockenmassegehaltes beträgt.

7. Verfahren nach einem der vorangegangenen Ansprüche, dadurch gekennzeichnet, daß das Wachstum der Organismen fortgeführt wird, bis der Bakteriengehalt des Fertigproduktes größer als $2 \times 10^8$ pro ml und nach Lagerung für 10 Tage und Nächte bei +8°C größer als $3 \times 10^7$ pro ml ist.

8. Verfahren nach einem der vorangegangenen Ansprüche, dadurch gekennzeichnet, daß der Hefeextrakt der Starterkulturmasse zugegeben und dem Milchansatz durch Beimpfen zugemischt wird.

9. Verfahren nach Anspruch 8 und einem der Ansprüche 1 bis 7, dadurch gekennzeichnet, daß die Hauptmenge an Hefeextrakt der Starterkulturmasse zugesetzt wird und daß eine geringe Menge des Hefeextrakts der Prozeßcharge Milch zugegeben wird.

10. Verfahren nach Anspruch 8 oder 9, dadurch gekennzeichnet, daß der Hefeextrakt in solcher Menge zugemischt wird, daß der Hefeextraktgehalt der beimpften Prozeßcharge Milch sich auf 0,1-2g pro Liter Milch beläuft.

11. Verfahren nach einem der vorangegangenen Ansprüche, dadurch gekennzeichnet, daß die UHT-behandelte Milch beimpft wird mit einer Mischung aus mehreren verschiedenen Starterkulturmassen, die verschiedene Stämme oder Spezies der Bakterien enthalten, die vorzugsweise von langsam wachsendem Typ sind.